# EUROPÄISCHE PATENTSCHRIFT

(11) **EP 3 551 333 B1**
(45) Veröffentlichungstag und Bekanntmachung des Hinweises auf die Patenterteilung: **14.10.2020**
(21) Anmeldenummer: 17832046.1
(22) Anmeldetag: 06.12.2017
(51) Int. Cl.: B02C 4/10, B02C 19/00, B02C 17/16, B29B 17/04, B29B 17/02, B29L 30/00

(54) **VORRICHTUNG ZUM AUFBEREITEN VON WERKSTOFFEN**
APPARATUS FOR TREATMENT OF MATERIALS
DISPOSITIF POUR TRAITEMENT DE MATÉRIAUX

(30) Priorität: 06.12.2016 DE 102016123543
(43) Veröffentlichungstag der Anmeldung: 16.10.2019
(73) Patentinhaber: Ritter, Jan, 78187 Geisingen (Kirchen-Hausen) (DE)
(72) Erfinder: RITTER, Guido, 78187 Geisingen (Kirchen-Hausen) (DE)
(74) Vertreter: Patentanwälte und Rechtsanwalt Weiß, Arat & Partner mbB
(86) Internationale Anmeldenummer: PCT/EP2017/081610
(87) Internationale Veröffentlichungsnummer: WO 2018/104355

(56) Entgegenhaltungen:
- EP-A1- 2 567 753
- DE-A1- 2 315 587
- DE-A1-102011 012 236

## Beschreibung

Die Erfindung betrifft eine Vorrichtung nach dem Oberbegriff des Anspruchs 1.

### Stand der Technik

Für die Behandlung von Werkstoffen in einem Gehäuse mittels eines Rotors wird eine Vielzahl von Möglichkeiten angeboten. Beispielsweise zeigt die EP 2 567 753 A1 eine Vorrichtung zum Behandeln eines Pulverwerkstoffs, welches durch die Reibungswärme zwischen Gehäuse und Rotor aufgeschmolzen wird.

In diesem Zusammenhang wird ausserdem auf die DE 297 07 269 U1 verwiesen, welche eine Anlage zur Aufbereitung von Abfallprodukten auf Basis von Kunststoff und Kunststoffverbundmaterialien einschließlich Zellulose, Leichtstoffen, Metallabfällen, Schmutzpartikeln und Feuchte, umfassend eine erste Vorrichtung zum Vorzerkleinern der Abfallprodukte zu einem Rohmahlgut und einer zweiten Vorrichtung zum Feinstzerkleinern des Rohmahlgutes in Gestalt einer Prallwirbelmühle mit einem Mahlraum mit einem Einlaß für Mahlluft und Rohmahlgut und einem Auslaß für Mahlluft und feinstzerkleinertes Abfallgut sowie gegebenenfalls Einrichtungen zum Reinigen und Abscheiden und Trennen für die in den Abfallprodukten außer Kunststoffen enthaltenen hiervon verschiedenen Materialien.

Die DE 2 315 587 A1 betrifft ein Verfahren und eine Vorrichtung zum Pulverisieren von vulkanisiertem Gummi und vulkanisierten Gummiprodukten. Diese Vorrichtung weist einen Rotor mit eier-förmigem Querschnitt auf.

Die DE 10 2011 012 236 A1 bezieht sich auf einen Stofflöser zum Zerkleinern und Suspendieren von Papierstoff, wobei zwischen einem Gehäuse und einem Rotor ein Ringspalt ausgebildet wird und wobei das Spaltmaß des Ringspalts an einer jeweiligen Umfangsposition des Ringspalt in Abhängigkeit von der relativen Drehstellung des Körpers zu der Seitenwand variiert.

Die vorliegende Erfindung bezieht sich aber auf das Recycling von Werkstoffen aus zumindest zwei Bestandteilen durch Trennen, Zerkleinern und Deformieren dieser Bestandteile. Dass heute ein Recycling von Werkstoffen unabdingbar ist, muss als allgemein bekannt vorausgesetzt werden. Die Vorrichtungen hierfür sind vielfältig und werden laufend verbessert. Die vorliegende Erfindung bezieht sich sowohl auf Verbundwerkstoffe, wie beispielsweise Sportplatzbeläge oder Altreifen. Dies sind aber Beispiele, welche die vorliegende Erfindung in keiner Weise einschränken sollen.

Aus der DE 10 2008 063 047 A1 ist beispielsweise ein Verfahren zur Aufbereitung einer textilen Fraktion bekannt, welche bei der Aufbereitung von Altreifen erzeugt wird. In einem ersten Verfahrensschritt wird die textile Fraktion ausgelockert, danach erfolgt eine Dichtetrennung der aufgelockerten textilen Fraktion durch Schwerkraft und Luftstrom in eine Schwergutfraktion und eine Leichtgutfraktion, danach eine Abtrennung von metallischen Bestandteilen aus der im Luftstrom befindlichen Leichtgutfraktion und danach ein Abscheiden der metallreduzierten Leichtgutfraktion aus dem Luftstrom. Das Ganze geschieht in einer Prallmühle, bei der, wie allgemein bekannt, der Werkstoff bzw. Bestandteile des Werkstoffs gegen entsprechende Schikanen geschleudert wird, so dass sie aufplatzt.

Der Nachteil dieses Verfahrens, wie auch anderer Verfahren mit Prallmühlen, ist der, dass dennoch Fraktionen zusammenhaften bzw. Reste der einen Fraktion an der anderen Fraktion hängenbleiben.

### Aufgabe

Aufgabe der vorliegenden Erfindung ist die Schaffung einer Vorrichtung der o.g. Art mit denen ein weitest mögliches Trennen von Werkstoffen bzw. weitest gehendes Zerkleinern von Werkstoffen in seine Bestandteile möglich ist.

### Lösung der Aufgabe

Zur Lösung der Aufgabe führen die Merkmale nach Anspruch 1.

Im Gegensatz zu den bekannten Prallmühlen, bei denen der Werkstoff gegen die Wand bzw. Schikanen in dem Gehäuse geschleudert wird, erfolgt nach der vorliegenden Erfindung ein Walken des Werkstoffes zwischen Rotor und Innenwand, wodurch die Form des Werkstoffs laufend geändert wird, so dass sich Verbindungen von Bestandteilen in dem Werkstoff, vor allem aber auch Verbindungen von unterschiedlichen Werkstoffen auflösen. Dieses Walken umfasst auch ein Kneten und Scheren des aufzubereitenden Werkstoffs in möglichst alle Richtungen.

In einem bevorzugten Ausführungsbeispiel wird zur Erzeugung dieses Walkvorganges ein Spalt zwischen Innenrohr und Rotor beim Drehen des Rotors laufend verkleinert und wieder vergrössert. In diesem Spalt findet das Walken des Werkstoffs statt, so dass laufend die Werkstoffpartikel oder auch die Werkstoffe unterschiedlicher Fraktionen gegeneinander geschert und damit eine Verbindung zwischen diesen Stoffen aufgehoben wird.

Anschliessend an dieses Walken werden dann die Stoffe ausgetragen, wobei je nach Stoff ein anschließender Separationsvorgang stattfinden kann. Nur als Beispiel wird hier das Schwimm-Sink-Verfahren verwendet, bei dem in einer Flüssigkeit z.B. Kunststoff von Metall getrennt wird, indem der Kunststoff aufschwimmt und das Metall absinkt. Dies ist nur eines der vielen Beispiele, die für einen Trennvorgang gewählt werden können.

Eine entsprechende Vorrichtung vor, dass der Abstand zwischen Innenwand des Gehäuses und Rotor sich beim Drehen des Rotors laufend ändert. Dies kann auf vielfältige Art und Weise geschehen. Beispielsweise können Innenwand des Gehäuses und/oder Aussenumfang des Rotors unrund ausgebildet sein, so dass auf diese Art und Weise ein unterschiedlicher sich ändernder Druck auf den Werkstoff erzeugt wird. Am geeignetsten erscheint allerdings, wenn der Rotor Anformungen aufweist, welche einen Druck auf das Material in Richtung der Innenwand des Gehäuses aufbauen. Dies können entsprechende Schikanen oder Flügel sein. Beispielsweise können an dem Rotor Flügel vorgesehen werden, welche schräg nachlaufend zu einer Drehachse des Rotors angestellt sind. Das bedeutet, dass bei einem Drehen des Rotors sich durch die schräge Anstellung der Druck auf den Werkstoff erhöht und dieser gegen die Innenwand gepresst wird.

Andererseits kann auch die Innenwand des Gehäuses Vorsprünge aufweisen, welche einen Druck gegen den Rotor auf den Werkstoff ausüben. Wesentlich ist alleine, dass sich der Spalt zwischen Innenwand und Rotor, durch den der Werkstoff durchgepresst wird, laufend ändert. Dadurch ergibt sich das erfindungsgemässe Walken des Werkstoffes.

Erfindungsgemäß weisen sowohl Rotor als auch Innenwand entsprechende Anformungen bzw. Vorsprünge auf, welche zusammenwirken. Hierzu sind an dem Rotor die bereits oben erwähnten schräg gestellten Anformungen oder Flügel vorgesehen, die mit einer sägezahnartig ausgebildeten Innenwand zusammenwirken können. Auch hier sind allerdings viele Möglichkeiten denkbar, die von der vorliegenden Erfindung umfasst sein sollen.

Denkbar ist auch, dass die Anformungen oder Flügel verstellt bzw. ersetzt werden können, ebenso auch die Vorsprünge oder sägezahnartigen Ausbildungen an der Innenwand.

### Figurenbeschreibung

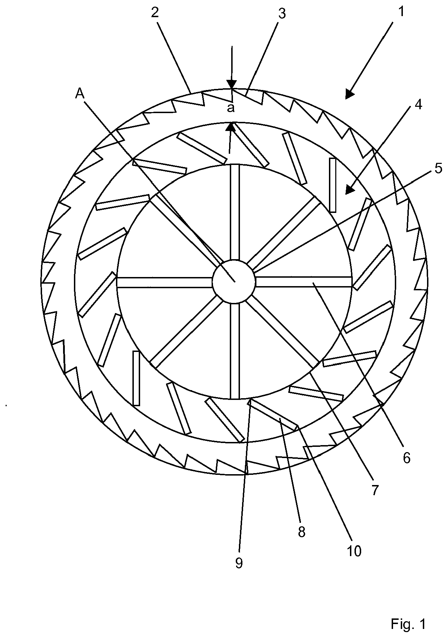

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in ihrer einzigen Figur eine schematische Draufsicht auf eine erfindungsgemässe Vorrichtung zum Aufbereiten von Werkstoffen.

Die Vorrichtung weist ein Gehäuse 1 auf, welches waagrecht, schräg oder vertikal angeordnet sein kann. Bevorzugt besteht das Gehäuse aus Metall oder einem beliebigen anderen verschleißfesten Werkstoff und weist im gezeigten Ausführungsbeispiel eine Innenwand 2 auf, die mit sägezahnartigen Vorsprüngen 3 belegt ist. Diese sägezahnartigen Vorsprünge 3 verringern in Drehrichtung eines Rotors 4 einen Abstand a zwischen diesem Rotor 4 und dem Vorsprung 3. Die Drehrichtung verläuft im Uhrzeigersinn.

Der Rotor 4 besitzt eine Nabe 5, welche um eine Drehachse A dreht. Mit der Nabe 5 ist über Speichen 6 ein Ring 7 verbunden, auf dem Anformungen 8 aufsitzen. Im vorliegenden Ausführungsbeispiel sind diese Anformungen 8 wand- oder flügelartig ausgebildet und so auf dem Ring 7 angeordnet, dass sie im Verhältnis zur Drehachse A in Drehrichtung nachlaufen. Damit ist gemeint, dass eine Vorderkante 9 der Anformung 8, die der Drehachse A näherliegt, in Drehrichtung vor einer hinteren Kante 10 der Anformung 8 auf dem Ring 7 angeordnet ist.

Die Funktionsweise der vorliegenden Erfindung ist folgende:
Zum Aufbereiten des Werkstoffes wird dieser in das Gehäuse 1 eingefüllt. Beim Drehen des Rotors 4 erfolgt ein Verfrachten des Werkstoffes nach aussen gegen die Innenwand 2 des Gehäuses 1. Der Werkstoff gelangt damit in den Bereich des Spaltes zwischen dem Ring 7 bzw. den Anformungen 8 und der Innenwand 2. Der Werkstoff wird dabei durch den Rotor 4 bzw. vor allem durch die Anformungen 8, die schräg angestellt sind, gegen die sägezahnartige Vorsprünge 3 gedrückt, so dass sich der Druck auf den Werkstoff, durch den sich immer wieder verringernden Abstand a wesentlich erhöht und der Werkstoff gewalkt wird. Hierdurch erfolgt ein Auflösen des Gefüges des Werkstoffs in seine einzelnen Bestandteile. Vor allem ist dies sehr gut bei der Aufbereitung von Altreifen zu erkennen. Durch das fortlaufende Walken und Scheren des Werkstoffes wird das Gefüge zwischen Gummi und Metall intensiv zerstört. Bei einer entsprechenden Geschwindigkeit des Rotors erfolgt gleichzeitig auch ein Zerkleinern und ein Verformen des Werkstoffes, sofern dies möglich ist. Bei Metall hat dies zur Folge, dass zum Schluss Metallkügelchen ausgetragen werden. Der Gummi wird in kleinste Teile zerfetzt. Beide Fraktionen liegen fast rein vor.

### Bezugszeichenliste

| | |
|---|---|
| 1 | Gehäuse |
| 2 | Innenwand |
| 3 | sägezahnartige Vorsprünge |
| 4 | Rotor |
| 5 | Nabe |
| 6 | Speiche |
| 7 | Ring |
| 8 | Anformung |
| 9 | vordere Kante |
| 10 | hintere Kante |
| A | Drehachse |
| a | Abstand |

## Patentansprüche

1. Vorrichtung zum Recycling von Werkstoffen aus zumindest zwei Bestandteilen durch Trennen, Zerkleinern und Deformieren dieser Bestandteile mit einem Gehäuse (1), welches feststeht, und mit einem Rotor (4), der in dem Gehäuse (1) mit Abstand (a) zu einer Innenwand (2) des Gehäuses (1) dreht und dabei die Werkstoffe bewegt, wobei der Abstand (a) zwischen Innenwand (2) des Gehäuses (1) und Rotor (4) sich beim Drehen des Rotors (4) laufend ändert, wobei der Rotor (4) Anformungen (8) aufweist, welche einen Druck auf das Material in Richtung Innenwand (2) des Gehäuses (1) aufbauen, wobei an der Innenwand (2) des Gehäuses (1) Vorsprünge (3) vorgesehen sind, wobei die Vorsprünge (3) sägezahnartig ausgestaltet sind,
**dadurch gekennzeichnet,**
**dass** an dem Rotor (4) Anformungen (8) vorgesehen sind, welche schräg nachlaufend zu einer Drehachse (A) des Rotors (4) angestellt sind, wobei die Anformungen (8) und/oder die Vorsprünge (3) verstellbar bzw. austauschbar sind, wobei die sägezahnartigen Vorsprünge (3) in Drehrichtung eines Rotors (4) einen Abstand (a) zwischen diesem Rotor (4) und dem jeweiligen Vorsprung (3) verringern, wobei der Rotor (4) eine Nabe (5) besitzt, welche um eine Drehachse A dreht, wobei mit der Nabe (5) über Speichen (6) ein Ring (7) verbunden ist, auf dem die Anformungen (8) aufsitzen, wobei diese Anformungen (8) wand- oder flügelartig ausgebildet sind und so auf dem Ring (7) angeordnet sind, dass sie im Verhältnis zu der Drehachse (A) in Drehrichtung nachlaufend sind, wobei eine Vorderkante (9) jeder Anformung (8), die der Drehachse (A) näherliegt, in Drehrichtung vor einer hinteren Kante (10) dieser Anformung (8) auf dem Ring (7) angeordnet ist.

## Claims

1. Device for recycling materials consisting of at least two components by separating, comminuting and deforming these components, with a housing (1) which is stationary, and having a rotor (4) which rotates in the housing (1) at a distance (a) from an inner wall (2) of the housing (1) and thereby moves the materials, wherein the distance (a) between the inner wall (2) of the housing (1) and the rotor (4) changes continuously as the rotor (4) rotates, wherein the rotor (4) has formations (8) which build up a pressure on the material in the direction of the inner wall (2) of the housing (1), wherein projections (3) are provided on the inner wall (2) of the housing (1), wherein the projections (3) are designed like sawtooth,
**characterized in,**
**that** formations (8) are provided on the rotor (4), which are set at an obliquely trailing position relative to a rotary axis (A) of the rotor (4), the formations (8) and/or the projections (3) being adjustable or replaceable, wherein the sawtooth-like projections (3) reduce a distance (a) between this rotor (4) and the respective projection (3) in the direction of rotation of a rotor (4), wherein the rotor (4) has a hub (5) which rotates about an rotary axis (A), wherein a ring (7) on which the formations (8) are seated is connected to the hub (5) via spokes (6), wherein these formations (8) are of wall- or wing-like design and are arranged on the ring (7) in such a way that they are trailing in the direction of rotation relative to the rotary axis (A), wherein a front edge (9) of each formation (8) which is closer to the rotary axis (A) is arranged on the ring (7) in front of a rear edge (10) of this formation (8) in the direction of rotation.

## Revendications

1. Dispositif de recyclage de matériaux composés d'au moins deux éléments par séparation, broyage et déformation de ces éléments, avec un boîtier (1) qui est fixe et avec un rotor (4) qui tourne dans le boîtier (1) à une distance (a) d'une paroi intérieure (2) du boîtier (1) et déplace ainsi les matériaux, dans lequel la distance (a) entre la paroi intérieure (2) du boîtier (1) et le rotor (4) varie en continu lors de la rotation du rotor (4), dans lequel le rotor (4) présente des surmoulages (8) qui accumulent une pression sur le matériau en direction de la paroi intérieure (2) du boîtier (1), dans lequel des saillies (3) sont prévues sur la paroi intérieure (2) du boîtier (1), dans lequel les saillies (3) sont réalisées en forme de dent de scie,
**caractérisé par le fait**
**que** sur le rotor (4) sont prévues des surmoulages (8) qui sont disposées inclinées vers l'arrière par rapport à un axe de rotation (A) du rotor (4), où les surmoulages (8) et/ou les saillies (3) sont déplaçables ou échangeables, où les saillies en dents de scie (3) réduisent, dans la direction de rotation d'un rotor (4), une distance (a) entre ce rotor (4) et la saillie respective (3), où le rotor (4) possède un moyeu (5) qui tourne autour d'un axe de rotation (A), où au moyeu (5) est connectée, par l'intermédiaire de rayons (6), une bague (7) sur laquelle se trouvent les surmoulages (8), où ces surmoulages (8) sont réalisés en forme de paroi ou d'aile et sont disposés sur la bague (7) de sorte qu'ils se trouvent en arrière par rapport à l'axe de rotation (A) dans la direction de rotation, où un bord avant (9) de chaque surmoulage (8) qui est plus rapproché de l'axe de rotation (A) est disposé, dans la direction de rotation, devant un bord arrière (10) de ce surmoulage (8) sur la bague (7).
